# EUROPEAN PATENT APPLICATION

(11) **EP 4 826 863 A1**
(43) Date of publication of application: **21.10.2026**
(21) Application number: 26171900.9
(22) Date of filing: 13.04.2026
(51) Int. Cl.: H01M 50/15, H01M 50/169, H01M 50/184, H01M 50/188

(54) **END COVER ASSEMBLY, ENERGY-STORAGE APPARATUS, AND POWER-CONSUMING DEVICE**

(30) Priority: 15.04.2025 CN 202520711791 U; 15.04.2025 CN 202510472523
(71) Applicant: Xiamen Hithium Energy Storage Technology Co., Ltd., Xiamen, Fujian 361100 (CN)
(72) Inventor: XIAO, Hepan, Xiamen, 361100 (CN); XU, Weidong, Xiamen, 361100 (CN); LI, Wenbo, Xiamen, 361100 (CN)
(74) Representative: Viering, Jentschura & Partner mbB Patent- und Rechtsanwälte

(57) **Abstract**

Provided are an end cover assembly, an energy-storage apparatus, and a power-consuming device. A second mounting hole of an upper insulating member is in communication with a first mounting hole of an end cover. A first mounting recess surrounds the second mounting hole. A press ring is mounted in the first mounting recess, and a first surface of the press ring and a bottom wall surface of the first mounting recess cooperatively define a first exhaust passage. A distance between a second end and a first end of the first exhaust passage is less than or equal to a length of the first exhaust passage. A peripheral side surface of the press ring and a side wall surface of the first mounting recess cooperatively define a second exhaust passage. A third mounting hole of the press ring is in communication with the second mounting hole and the first end.

## Description

### TECHNICAL FIELD

This disclosure relates to the field of energy storage technologies, and in particular, to an end cover assembly, an energy-storage apparatus, and a power-consuming device.

### BACKGROUND

A rechargeable battery, also known as a secondary battery or a storage battery, refers to a type of battery that can be reused by charging to reactivate active material after discharge. Due to its recyclable characteristics, the rechargeable battery has gradually become a primary power source for a power-consuming device. As the demand for rechargeable batteries continues to increase, people have higher and higher performance requirements on various aspects of the rechargeable battery, especially requirements on usage reliability of the rechargeable battery. In an existing rechargeable battery, a press ring is often assembled with a terminal post by means of welding. However, during a process of aligning and welding the press ring with the terminal post, welding defects such as excessive splatter spots or pinholes may occur at the welding interface, which reduces welding reliability between the press ring and the terminal post and consequently affects overall reliability of the battery.

### SUMMARY

The present disclosure provides an end cover assembly, an energy-storage apparatus, and a power-consuming device, which are used for improving welding reliability of a press ring and a terminal post and ensuring usage reliability of the energy-storage apparatus.

According to a first aspect, the present disclosure provides an end cover assembly for an energy-storage apparatus. The end cover assembly includes an end cover, an upper insulating member, a press ring, and a terminal post. The end cover defines a first mounting hole, and the first mounting hole extends through the end cover in a thickness direction of the end cover. In the thickness direction of the end cover, the upper insulating member is mounted at one side of the end cover. The upper insulating member defines a second mounting hole and a first mounting recess. The second mounting hole extends through the upper insulating member in a thickness direction of the upper insulating member and is in communication with the first mounting hole. An opening of the first mounting recess is defined in a surface of the upper insulating member facing away from the end cover. The first mounting recess surrounds the second mounting hole and is in communication with the second mounting hole. The first mounting recess has a bottom wall surface and a side wall surface. The bottom wall surface is opposite to the opening of the first mounting recess, and the side wall surface is connected to the bottom wall surface and surrounds the bottom wall surface. The press ring is mounted in the first mounting recess. The press ring has a first surface, a second surface, and a peripheral side surface. The first surface faces towards the bottom wall surface, the second surface is opposite to the first surface, and the peripheral side surface is connected between the first surface and the second surface. The press ring defines a third mounting hole, and the third mounting hole extends through the first surface and the second surface and is in communication with the second mounting hole.

The upper insulating member and the press ring cooperatively define a first exhaust passage in one of following three cases. In a first case, the upper insulating member further defines a first exhaust groove, an opening of the first exhaust groove is defined in the bottom wall surface, the first exhaust groove is in communication with the second mounting hole, and the first exhaust groove and the first surface cooperatively define the first exhaust passage. In a second case, the press ring defines a second exhaust groove, an opening of the second exhaust groove is defined in the first surface, the second exhaust groove is in communication with the third mounting hole, and the second exhaust groove and the bottom wall surface cooperatively define the first exhaust passage. In a third case, the upper insulating member further defines the first exhaust groove, the opening of the first exhaust groove is defined in the bottom wall surface, the first exhaust groove is in communication with the second mounting hole, the press ring defines the second exhaust groove, the opening of the second exhaust groove is defined in the first surface, the second exhaust groove is in communication with the third mounting hole, and the second exhaust groove and the first exhaust groove cooperatively define the first exhaust passage. The first exhaust passage has a first end and a second end, the first end is in communication with both the second mounting hole and the third mounting hole, and the second end is opposite to the first end. A distance between the second end and the first end is less than or equal to a length of the first exhaust passage.

The upper insulating member and the press ring cooperatively define a second exhaust passage in one of following two cases. In a first case, the upper insulating member is provided with a convex portion, and the convex portion is disposed on the side wall surface and abuts against the peripheral side surface to define the second exhaust passage between the side wall surface and the peripheral side surface. In a second case, the press ring is provided with a convex portion, and the convex portion is disposed on the peripheral side surface and abuts against the side wall surface to define the second exhaust passage between the peripheral side surface and the side wall surface. The second exhaust passage communicates the second end with an external environment. The terminal post passes through the first mounting hole, the second mounting hole, and the third mounting hole, and is fixedly welded to a wall surface of the third mounting hole.

During a welding process of the press ring and the terminal post, gas between the terminal post and the press ring expands under high temperature. The expanded gas will be discharged to an external environment along the first exhaust passage and the second exhaust passage. Since the gas will not be discharged from a molten weld bead, welding defects such as splatter spots or pinholes at the welding interface between the terminal post and the press ring can be avoided. In this way, welding reliability between the terminal post and the press ring can be ensured, and assembly reliability of the end cover assembly can be guaranteed. Furthermore, since the distance between the second end and the first end is less than or equal to the length of the first exhaust passage, a path of the first exhaust passage is extended. The first exhaust passage can not only allow welding gas to be discharged, but also reduce ingress of external moisture to the location where the terminal post is located. In this way, moisture can be prevented from corroding the sealing ring and causing failure of the sealing ring, thus ensuring sealing reliability of the end cover assembly, and prolonging a service life of the energy-storage apparatus.

The convex portion not only can achieve an interference fit between the press ring and the first mounting recess of the upper insulating member, and ensure assembly stability between the press ring and the upper insulating member, but also can space the peripheral side surface of the press ring apart from the side wall surface of the first mounting recess, such that the second exhaust passage is defined between the peripheral side surface of the press ring and the side wall surface of the first mounting recess.

In addition, since the first exhaust passage and the second exhaust passage can allow gas to pass through, temporary sealing caused by tight contact between the press ring and the upper insulating member, as well as between the upper insulating member and the end cover can be avoided. When the sealing ring fails, the end cover assembly can be promptly detected via helium detection, thereby ensuring sealing reliability of the end cover assembly, and preventing liquid leakage in the energy-storage apparatus.

Moreover, the first exhaust groove and the second exhaust groove can increase the cross-sectional area of the first exhaust passage, help to increase the exhaust rate of welding gas when the press ring is welded to the terminal post, and improve welding efficiency of the press ring and the terminal post.

In an embodiment, the first exhaust passage is implemented as multiple first exhaust passages, and the multiple first exhaust passages are arranged at intervals around the third mounting hole. In this way, the exhaust rate of the welding gas when the press ring is welded to the terminal post is increased, and the welding efficiency of the ring and the terminal post is improved.

In an embodiment, the first exhaust passage includes a first section, a corner section, and a second section. The first section is in communication with both the second mounting hole and the third mounting hole. The first section includes the first end. The second section is in communication with the second exhaust passage and includes the second end. The second section is spaced apart from the first section, and the corner section is connected between the first section and the second section.

The corner section can prolong the path of the first exhaust passage. The first exhaust passage not only can allow welding gas to be discharged, but also can reduce ingress of external moisture to the location where the terminal post is located. In this way, moisture can be prevented from corroding the sealing ring and causing failure of the sealing ring, thus ensuring sealing reliability of the end cover assembly, and prolonging the service life of the energy-storage apparatus.

In an embodiment, the corner section includes multiple bent portions, the multiple bent portions are sequentially connected, and at least two bent portions among the multiple bent portions have opposite bending directions. In this way, the resistance against external moisture reaching the location where the terminal is located via the first exhaust passage can be increased, thereby preventing the sealing ring from failing due to corrosion of the sealing ring by the moisture, ensuring sealing reliability of the end cover assembly, and prolonging the service life of the energy-storage apparatus.

In an embodiment, a maximum width of the first exhaust passage is greater than or equal to 0.01 mm and less than or equal to 5 mm; and/or a depth of the first exhaust passage is greater than or equal to 0.01 mm and less than or equal to 0.5 mm.

With this design, it can not only ensure that the first exhaust passage has an effective exhaust function, but also prevent external moisture from corroding the sealing ring due to the oversized first exhaust passage, thereby preventing liquid leakage of the end cover assembly after the sealing ring deteriorates and loses its function, ensuring the sealing performance of the end cover assembly, and prolonging the service life of the energy-storage apparatus.

In an embodiment, the end cover assembly further includes a sealing ring. The sealing ring is sleeved on the terminal post and is disposed in the first mounting hole. The sealing ring is clamped between the terminal post and a wall surface of the first mounting hole in a radial direction of the terminal post. This can not only avoid a short circuit caused by contact between the terminal post and the end cover, but also seal a gap between the terminal post and the end cover, thereby ensuring sealing reliability of the end cover assembly.

In an embodiment, the end cover further defines multiple first limiting holes, openings of the multiple first limiting holes face towards the upper insulating member. The multiple first limiting holes are defined around the first mounting hole and spaced apart from the first mounting hole. The upper insulating member further defines multiple second limiting holes, and the multiple second limiting holes extend through the bottom wall surface and a surface of the upper insulating member facing towards the end cover. The multiple second limiting holes are defined around the second mounting hole and are spaced apart from the second mounting hole. The multiple second limiting holes are in communication with the multiple first limiting holes in one-to-one correspondence. The press ring defines multiple third limiting holes, and openings of the multiple third limiting holes are defined in the first surface. The multiple third limiting holes are defined around the third mounting hole and are spaced apart from the third mounting hole. The third limiting holes are in in communication with the multiple second limiting holes in one-to-one correspondence. The end cover assembly further includes multiple limiting posts, and the multiple limiting posts respectively pass through the multiple second limiting holes in one-to-one correspondence. One end of each of the multiple limiting posts is inserted into a corresponding first limiting hole among the multiple first limiting holes, and the other end of each of the multiple limiting posts is inserted into a corresponding third limiting hole among the multiple third limiting holes.

The limiting post not only can increase assembling stability of the end cover assembly, but also improve the torsional strength of the terminal post, thereby improving usage reliability of the energy-storage apparatus.

In an embodiment, the upper insulating member defines a convex point, and the convex point is disposed on a wall surface of each of the multiple second limiting holes and abuts against a limiting post, so as to achieve an interference fit between the limiting post and the second limiting hole of the upper insulating member, and ensure assembly stability between the limiting post and the upper insulating member.

In an embodiment, the convex point is implemented as multiple convex points, and the multiple convex points are arranged at intervals within and around the second limiting hole, so as to improve assembling stability of the limiting post in the second limiting hole and avoid inclination of the limiting post.

In an embodiment, in a thickness direction of the end cover assembly, an abutment distance between the convex point and the limiting post is greater than or equal to 0.1 mm and less than or equal to 0.7 mm.

When the abutment distance between a second abutment surface and the limiting post is within an appropriate range, it can not only prevent the limiting post from tilting or even falling off due to an excessively small abutment distance, but also avoid scratching between the limiting post and the upper insulating member caused by an excessively large abutment distance, thereby reducing the influence of plastic debris generated by scratching between the limiting post and the upper insulating member on the sealing performance of the end cover assembly.

In an embodiment, an interference amount between the convex point and the limiting post is greater than or equal to 0.01 mm and less than or equal to 0.3 mm.

Due to dimensional variations in component manufacturing, when the interference amount between the convex point and the limiting post falls within an appropriate range, it can not only ensure that the limiting post will not to fall out of the second limiting hole due to an excessive small interference amount, but also prevent scraping between the limiting post and the upper insulating member due to an excessive large interference amount, thereby reducing the influence of plastic debris generated by scratching between the limiting post and the upper insulating member on the sealing performance of the end cover assembly.

According to a second aspect, the present disclosure provides an energy-storage apparatus. The energy-storage apparatus includes a housing, a cell assembly, and the above-mentioned end cover assembly. The housing defines an accommodating cavity and an opening. The accommodating cavity is defined inside the housing. The opening is defined on a top side of the accommodating cavity and is in communication with the accommodating cavity. The cell assembly is accommodated in the accommodating cavity, and the end cover assembly is mounted on the housing and seals the opening.

During a welding process of the press ring and the terminal post, gas between the terminal post and the press ring expands under high temperature. The expanded gas can be discharged to an external environment along the first exhaust passage and the second exhaust passage. Since the gas will not be discharged from a molten weld bead, welding defects such as splatter spots or pinholes at the welding interface between the terminal post and the press ring can be avoided. In this way, welding reliability between the terminal post and the press ring can be ensured, and assembly reliability of the end cover assembly can be guaranteed. Furthermore, since the distance between the second end and the first end is less than or equal to the length of the first exhaust passage, a path of the first exhaust passage is extended. The first exhaust passage can not only allow welding gas to be discharged, but also reduce ingress of external moisture to the location where the terminal post is located. In this way, moisture can be prevented from corroding the sealing ring and causing failure of the sealing ring, thus ensuring sealing reliability of the end cover assembly, and prolonging a service life of the energy-storage apparatus.

In addition, since the first exhaust passage and the second exhaust passage can allow gas to pass through, temporary sealing caused by tight contact between the press ring and the upper insulating member, as well as between the upper insulating member and the end cover can be avoided. When the sealing ring fails, the end cover assembly can be promptly detected via helium detection, thereby ensuring sealing reliability of the end cover assembly, and preventing liquid leakage in the energy-storage apparatus.

According to a third aspect, the present disclosure provides a power-consuming device. The power-consuming device includes the above-mentioned energy-storage apparatus. The energy-storage apparatus is configured to supply power to the power-consuming device.

### BRIEF DESCRIPTION OF THE DRAWINGS

To describe technical solutions in embodiments of the present disclosure more clearly, the following describes accompanying drawings required for describing the embodiments of the present disclosure.
FIG. 1 is a schematic structural view of an energy-storage apparatus according to the present disclosure.
FIG. 2 is an exploded schematic structural view of the energy-storage apparatus illustrated in FIG. 1.
FIG. 3 is a schematic cross-sectional view of the end cover assembly illustrated in FIG. 2, taken along line A-A.
FIG. 4 is an exploded schematic structural view of the end cover assembly illustrated in FIG. 2 according to a first embodiment.
FIG. 5 is a schematic structural view of an end cover and a lower insulating member in the end cover assembly illustrated in FIG. 4.
FIG. 6 is a schematic structural view of an upper insulating member in the end cover assembly illustrated in FIG. 4.
FIG. 7 is a schematic structural view of a press ring of the end cover assembly illustrated in FIG. 4, viewed from another direction.
FIG. 8 is a schematic structural view of an assembly of an upper insulating member and a press ring in the end cover assembly illustrated in FIG. 4.
FIG. 9 is a schematic cross-sectional view of the end cover assembly illustrated in FIG. 2, taken along line B-B.
FIG. 10 is an exploded schematic structural view of the end cover assembly illustrated in FIG. 2 according to a second embodiment.
FIG. 11 is a schematic structural view of a press ring of the end cover assembly illustrated in FIG. 10, viewed from another direction.
FIG. 12 is a schematic block diagram of a power-consuming device.

Descriptions of reference signs: power-consuming device 200, energy-storage apparatus 100, housing 110, end cover assembly 120, cell assembly 130, end cover 10, lower insulating member 20, explosion-proof valve 30, protection sheet 40, upper insulating member 50, press ring 60, terminal post 70, sealing ring 80, limiting post 90, third surface 101, fourth surface 102, explosion-proof hole 103, liquid inlet hole 104, first mounting hole 105, second mounting recess 106, first limiting hole 107, accommodating cavity 110a, opening 110b, explosion-proof fence 21, liquid injection hole 201, fourth mounting hole 202, fifth surface 501, sixth surface 502, second mounting hole 503, first mounting recess 504, second limiting hole 505, first exhaust groove 506, bottom wall surface 507, side wall surface 508, first air-inlet end 506a, first air-outlet end 506b, first exhaust section 506c, second exhaust section 506d, intermediate section 506f, curved portion 506g, convex portion 51, convex point 52, first abutment surface 511, first guide surface 512, second abutment surface 521, second guide surface 522, third guide surface 523, first surface 601, second surface 602, peripheral side surface 603, first exhaust passage 121, first end 121a, second end 121b, first section 121c, second section 121d, corner section 121f, bent portion 121g, second exhaust passage 122, third mounting hole 604, third limiting hole 605, second exhaust groove 606, second air-inlet end 606a, second air-outlet end 606b, third exhaust section 606c, fourth exhaust section 606d, connecting section 606f, folded portion 606g.

### DETAILED DESCRIPTION

The following clearly and completely describes technical solutions in embodiments of the present disclosure with reference to accompanying drawings in the embodiments of the present disclosure.

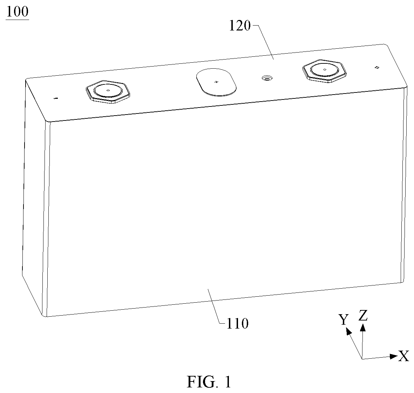

Reference is made to FIG. 1, where FIG. 1 is a schematic structural view of an energy-storage apparatus 100 according to the present disclosure. For ease of description, a width direction of the energy-storage apparatus 100 is defined as an X-axis direction, a length direction of the energy-storage apparatus 100 is defined as a Y-axis direction, a height direction of the energy-storage apparatus 100 is defined as a Z-axis direction, and the X-axis direction, the Y-axis direction, and the Z-axis direction are perpendicular to each other.

The present disclosure provides an energy-storage apparatus 100. The energy-storage apparatus 100 may include, but is not limited to, a unit battery, a battery module, a battery pack, a battery system, and the like. An actual application form of the energy-storage apparatus 100 provided in the present disclosure may be, but is not limited to, the listed products, and may also be other application forms. The application form of the energy-storage apparatus 100 is not strictly limited in the present disclosure. For illustration, the energy-storage apparatus 100 is a square battery in the present disclosure.

The energy-storage apparatus 100 includes a housing 110, a cell assembly 130, and an end cover assembly 120. The housing 110 defines an accommodating cavity 110a and an opening 110b. The accommodation cavity is defined inside the housing 110 and accommodates electrolyte. The opening 110b is defined on a top side of the accommodation cavity 110a and is in communication with the accommodation cavity 110a. The housing 110 may be made of aluminum, for example, the housing 110 may be an aluminum case. The cell assembly is accommodated in the accommodating cavity 110a. The cell assembly is immersed in the electrolyte, and the end cover assembly 120 is mounted on the housing 110, seals the opening 110b, and is electrically connected to the cell assembly.

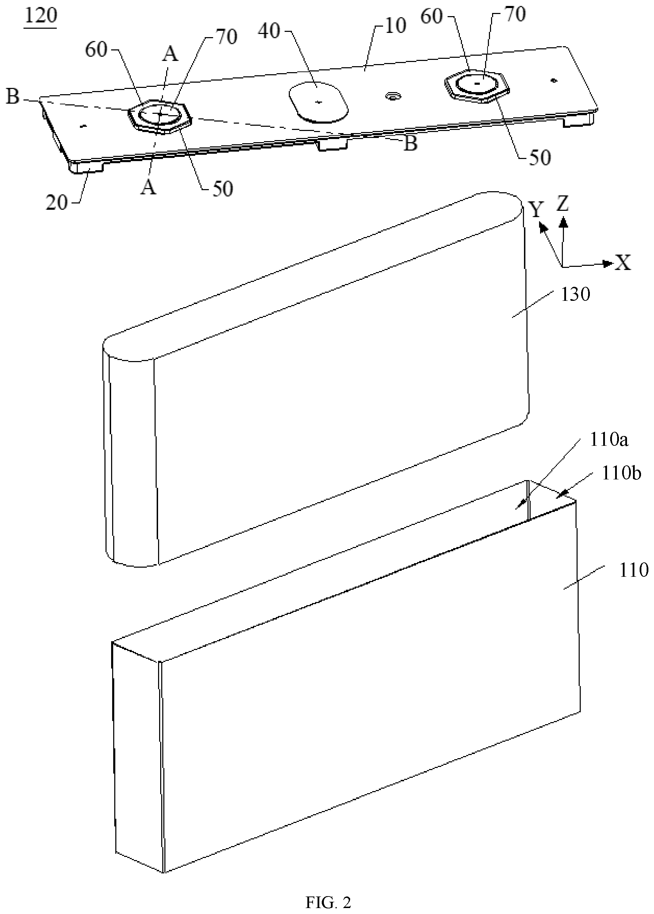

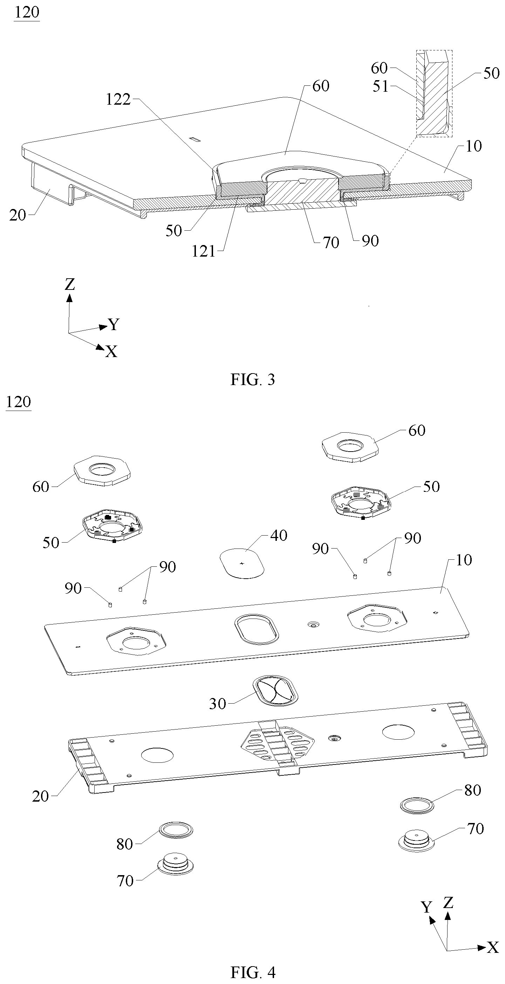

Reference is made to FIGS. 2 to 4, where FIG. 2 is an exploded schematic structural view of the energy-storage apparatus 100 illustrated in FIG. 1, FIG. 3 is a schematic cross-sectional view of the end cover assembly illustrated in FIG. 2, taken along line A-A, and FIG. 4 is an exploded schematic structural view of the end cover assembly illustrated in FIG. 2 according to a first embodiment. Section along line A-A means section along a plane where the line A-A is located, and similar description can be similarly understood hereinafter.

The end cover assembly 120 includes an end cover 10, a lower insulating member 20, an explosion-proof valve 30, a protection sheet 40, an upper insulating member 50, a press ring 60, a terminal post 70, a sealing ring 80, and a limiting post 90. The lower insulating member 20 is mounted at one side of the end cover 10 in a thickness direction of the end cover 10 (i.e., the Z-axis direction illustrated in the figure). The explosion-proof valve 30 and the protection sheet 40 are both mounted on the end cover 10. In the thickness direction of the end cover 10, the upper insulating member 50 is mounted on the other side of the end cover 10. The upper insulating member 50 is implemented as two upper insulating members 50, and the two upper insulating members 50 are arranged at intervals in a length direction of the end cover 10 (i.e., the X-axis direction illustrated in the figure). One upper insulating member 50 serves as a positive upper insulating member, and the other upper insulating member 50 serves as a negative upper insulating member. The press ring 60 is mounted to the upper insulating member 50. The press ring 60 is implemented as two press rings 60. One press ring 60 serves as a positive press ring, and is attached to the positive upper insulating member. The other press ring 60 serves as a negative press ring, and is attached to the negative upper insulating member.

In the thickness direction of the end cover assembly 120 (i.e., the Z-axis direction illustrated in the figure), the terminal post 70 passes through the end cover 10, the lower insulating member 20, the upper insulating member 50, and the press ring 60, and is fixedly connected to the press ring 60. The terminal post 70 is implemented as two terminal posts 70. One terminal post 70 serves as a positive terminal post. The positive terminal post passes through the end cover 10, the lower insulating member 20, the positive upper insulating member, and the positive press ring, and is fixedly connected to the positive press ring. The other terminal post 70 serves as a negative terminal post. The negative terminal post passes through the end cover 10, the lower insulating member 20, the negative upper insulating member, and the negative press ring, and is fixedly connected to the negative press ring. The sealing ring 80 is sleeved on the terminal post 70 and is clamped between the end cover 10 and the terminal post 70. The sealing ring 80 is implemented as two sealing rings 80. One sealing ring 80 serves as a positive sealing ring, is sleeved on the positive terminal post, and is clamped between the end cover 10 and the positive terminal post. The other sealing ring 80 serves as a negative sealing ring, is sleeved on the negative post, and is clamped between the end cover 10 and the negative terminal post.

In the thickness direction of the end cover assembly 120, the limiting post 90 passes through the upper insulating member 50 and abuts between the end cover 10 and the press ring 60. The limiting post 90 is implemented as six limiting posts 90. Three limiting posts 90 pass through the positive upper insulating member, abut between the end cover 10 and the positive press ring, and are arranged at intervals around the positive terminal post. Other three limiting posts 90 pass through the negative upper insulating member and abut between the end cover 10 and the negative press ring, and are arranged at intervals around the negative terminal post.

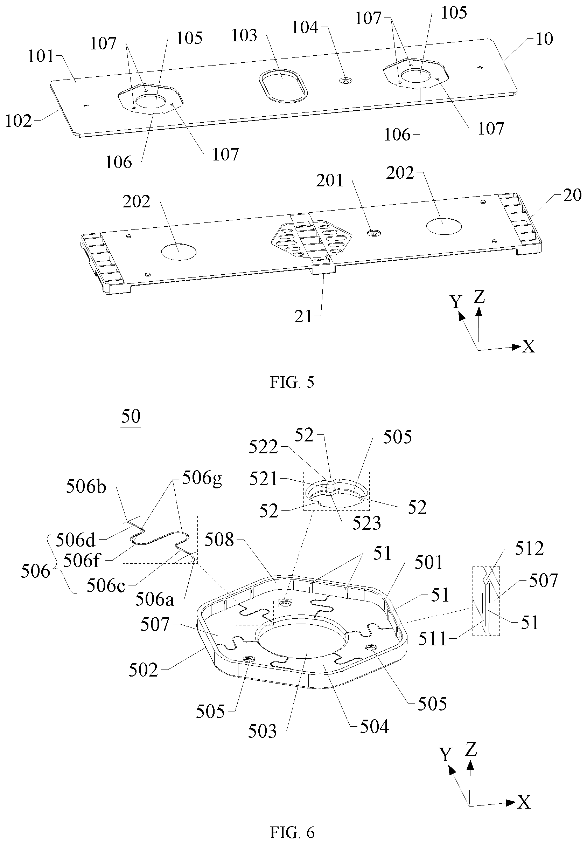

Reference is further made to FIG. 5, where FIG. 5 is a schematic structural view of the end cover 10 and the lower insulating member 20 in the end cover assembly 120 illustrated in FIG. 4.

The end cover 10 has a third surface 101 and a fourth surface 102 opposite to each other in the thickness direction of the end cover 10. The end cover 10 defines an explosion-proof hole 103, a liquid inlet hole 104, a first mounting hole 105, a second mounting recess 106, and a first limiting hole 107. The explosion-proof hole 103, the liquid inlet hole 104, and the first mounting hole 105 all extend through the end cover 10 in the thickness direction of the end cover 10. In other words, the explosion-proof hole 103, the liquid inlet hole 104, and the first mounting hole 105 all extend through the third surface 101 and the fourth surface 102. In the length direction of the end cover 10, the explosion-proof hole 103 is defined in the middle of the end cover 10, and the liquid inlet hole 104 is defined at one side of the explosion-proof hole 103 and is spaced apart from the explosion-proof hole 103. The first mounting hole 105 is implemented as two first mounting holes 105. One first mounting hole 105 is defined at one side of the liquid inlet hole 104 facing away from the explosion-proof hole 103 and is spaced apart from the liquid inlet hole 104. The other first mounting hole is located at one side of the explosion-proof hole 103 facing away from the liquid inlet hole 104, and is spaced apart from the explosion-proof hole 103.

An opening of the second mounting recess 106 is defined in the third surface 101, and the second mounting recess 106 is recessed from the third surface 101 towards the fourth surface 102 (i.e., in a negative Z-axis direction illustrated in the figure), surrounds the first mounting hole 105, and is in communication with the first mounting hole 105. The second mounting recess 106 is implemented as two second mounting recesses, and the two second mounting recesses 106 are spaced apart with each other in the length direction of the end cover 10. Each of the second mounting recesses 106 surrounds one of the two first mounting holes 105 and is in communication with the one of the two first mounting holes 105. Exemplarily, the second mounting recess 106 is in a regular hexagonal shape, the second mounting recess 106 has six side wall surfaces (not illustrated), the six side wall surfaces are connected end to end in sequence, and two side wall surfaces among the six side wall surfaces are parallel to a width direction of the end cover 10 (i.e., the Y-axis direction illustrated in the figure).

An opening of the first limiting hole 107 faces towards the upper insulating member 50 and is defined in a bottom wall surface of the second mounting recess 106. The first limiting hole 107 is recessed from the bottom wall surface of the second mounting recess 106 to the fourth surface 102 (i.e., a negative Z-axis direction illustrated in the figure), and is spaced from the first mounting hole 105. The first limiting hole 107 is implemented as multiple first limiting holes 107, one part of the first limiting holes 107 are arranged at intervals around one first mounting hole 105, and the other part of the first limiting holes 107 are arranged at intervals around the other first mounting hole 105. Exemplarily, there are six first limiting holes 107, and every three first limiting holes 107 are arranged at equal intervals around one first mounting hole 105.

The lower insulating member 20 is disposed at one side of the fourth surface 102 facing away from the third surface 101. The lower insulating member 20 has an explosion-proof fence 21. In a length direction of the lower insulating member 20 (i.e., the Y-axis direction illustrated in the figure), the explosion-proof fence 21 is disposed in the middle of the lower insulating member 20, and is opposite to the explosion-proof hole 103. The lower insulating member 20 defines a liquid injection hole 201 and a fourth mounting hole 202. Both the liquid injection hole 201 and the fourth mounting hole 202 extend through the lower insulating member 20 in a thickness direction of the lower insulating member 20 (i.e., the Z-axis direction illustrated in the figure). In the length direction of the lower insulating member 20, the liquid injection hole 201 is defined at one side of the explosion-proof fence 21 and is spaced apart from the explosion-proof fence 21. The liquid injection hole 201 is in communication with the liquid inlet hole 104. An external electrolyte may enter the energy-storage apparatus 100 sequentially through the liquid inlet hole 104 and the liquid injection hole 201, so as to implement liquid injection for the energy-storage apparatus 100. The fourth mounting hole is implemented as two fourth mounting holes 202. One fourth mounting hole 202 is located at one side of the liquid injection hole 201 facing away from the explosion-proof fence 21. This one fourth mounting hole 202 is spaced apart from the liquid injection hole 201 and is in communication with one first mounting hole 105. The other fourth mounting hole 202 is located at one side of the explosion-proof fence 21 facing away from the liquid injection hole 201. This fourth mounting hole 202 is spaced apart from the explosion-proof fence 21 and is in communication with the other first mounting hole 105.

The explosion-proof valve 30 covers an opening of the explosion-proof hole 103 in the fourth surface 102 and the protection sheet 40 covers an opening of the explosion-proof hole 103 in the third surface 101. When the air pressure inside the energy-storage apparatus 100 is excessively high, gas inside the energy-storage apparatus 100 can be discharged to the outside of the energy-storage apparatus 100 promptly sequentially through the explosion-proof fence 21 and the explosion-proof hole 103. In this case, the explosion-proof valve 30 may be broken under the effect of the air pressure, thereby preventing explosion of the energy-storage apparatus 100, and improving usage reliability of the energy-storage apparatus 100.

Reference is further made to FIG. 6, where FIG. 6 is a schematic structural view of an upper insulating member 50 in the end cover assembly 120 illustrated in FIG. 4.

Each upper insulating member 50 is mounted in one second mounting recess 106. Exemplarily, each upper insulating member 50 is in a regular hexagon shape and matches one second mounting recess 106. Each upper insulating member 50 has a fifth surface 501 and a sixth surface 502. The fifth surface 501 is a surface of the upper insulating member 50 facing away from the end cover 10. The sixth surface 502 is opposite to the fifth surface 501 in a thickness direction of the upper insulating member 50 (i.e., the Z-axis direction illustrated in the figure). In other words, the sixth surface 502 is a surface of the upper insulating member 50 facing towards the end cover 10.

Each upper insulating member 50 defines a second mounting hole 503, a first mounting recess 504, a second limiting hole 505, and a first exhaust groove 506. The second mounting hole 503 extends through the upper insulating member 50 in the thickness direction of the upper insulating member 50 and is in communication with the first mounting hole 105. In other words, the second mounting hole 503 extends through the fifth surface 501 and the sixth surface 502. An opening of the first mounting recess 504 is defined in the fifth surface 501. The first mounting recess 504 is recessed from the fifth surface 501 towards the sixth surface 502 (i.e., in the negative Z-axis direction illustrated in the figure). The first mounting recess 504 has a bottom wall surface 507 and a side wall surface 508. The bottom wall surface 507 is opposite to the opening of the first mounting recess 504. The side wall surface 508 surrounds the bottom wall surface 507 and is connected between the bottom wall surface 507 and the fifth surface 501. Exemplarily, the first mounting recess 504 is in a regular hexagon shape, and the side wall surface 508 includes six third wall surfaces (not illustrated). The six third wall surfaces are connected end to end in sequence, and two third wall surfaces among the six third wall surfaces are parallel to the width direction of the end cover assembly 120 (i.e., the Y-axis direction illustrated in the figure).

The second limiting hole 505 passes through the bottom wall surface 507 and the sixth surface 502. The second limiting hole 505 is spaced from both the second mounting hole 503 and the sidewall surface 508, and is in communication with the first limiting hole 107. The second limiting hole 505 is implemented as multiple second limiting holes 505, and the multiple second limiting holes 505 are arranged at intervals around the second mounting hole 503 and are in communication with the multiple first limiting holes 107 in one-to-one correspondence. Exemplarily, there are three second limiting holes 505, and the three second limiting holes 505 are arranged at equal intervals around the second mounting hole 503.

The first exhaust groove 506 is recessed from the bottom wall surface 507 towards the sixth surface 502. The first exhaust groove 506 is in communication with the second mounting hole 503, and spaced apart from the second limiting hole 505. For example, the first exhaust groove 506 has a rectangular, triangular or trapezoidal cross section. Specifically, the first exhaust groove 506 is implemented as multiple first exhaust grooves 506, and the multiple first exhaust grooves 506 are arranged at intervals around the second mounting hole 503. Exemplarily, there are six first exhaust grooves 506, and the six first exhaust grooves 506 are arranged at equal intervals around the second mounting hole 503. The maximum width of the first exhaust grooves 506 is greater than or equal to 0.01 mm and less than 5 mm, and the depth of the first exhaust grooves 506 is greater than or equal to 0.01 mm and less than or equal to 0.5 mm. Exemplarily, a width of the first exhaust groove 506 is 0.2 mm, and a depth of the first exhaust groove 506 is 0.1 mm.

Each first exhaust groove 506 has a first air-inlet end 506a and a first air-outlet end 506b. The first air-inlet end 506a is one end of the first exhaust groove 506 close to the second mounting hole 503. The first air-inlet end 506a is in communication with the second mounting hole 503. The first air-outlet end 506b is one end of the first exhaust groove 506 close to the side wall surface 508. The first air-outlet end 506b is opposite to the first air-inlet end 506a. A distance between the first air-inlet end 506a and the first air-outlet end 506b is less than the length of the first exhaust groove 506. In other words, the first exhaust groove 506 is non-linear. In other embodiments, the distance between the first air-inlet end 506a and the first air-outlet end 506b may also be equal to the length of the first gas groove 506.

In this embodiment, the first exhaust groove 506 includes a first exhaust section 506c, a second exhaust section 506d, and an intermediate section 506f. The first exhaust section 506c is a portion of the first exhaust groove 506 close to the second mounting hole 503. The first exhaust section 506c is in communication with the second mounting hole 503, and includes the first air-inlet end 506a. The first exhaust section 506c is linear. The second exhaust section 506d is a portion of the first exhaust groove 506 close to the side wall surface 508. The second exhaust section 506d is spaced apart from the first exhaust section 506c and includes the first air-outlet end 506b. The second exhaust section 506d is linear. The intermediate section 506f is connected between the first exhaust section 506c and the second exhaust section 506d. The intermediate section 506f is non-linear. The intermediate section 506f may include multiple curved portions 506g, the multiple curved portions 506g are connected sequentially, and at least two curved portions 506g among the multiple curved portions bend in opposite directions. For example, the intermediate section 506f includes two curved portions 506g. Each of the two curved portions 506g may be U-shaped, and the two curved portions 506g have opposite bending directions.

In addition, each upper insulating member 50 is further provided with a convex portion 51 and a convex point 52. The convex portion 51 is disposed on the side wall surface 508. The convex portion 5 protrudes from the side wall surface 508 towards the second mounting hole 503. The convex portion 5 is spaced apart from the first exhaust groove 506. Exemplarily, the convex portion 51 is in a strip shape, and an extending direction of the convex portion 51 is parallel to the thickness direction of the end cover assembly 120. The convex portion 5 is implemented as multiple convex portions 51, and the multiple convex portions 51 are arranged at intervals around the bottom wall surface 507. Exemplarily, there are twelve convex portions 51, and every two convex portions 51 are disposed on one third wall surface.

Each convex portion 51 has a first abutment surface 511 and a first guide surface 512. The first abutment surface 511 is a surface of the convex portion 51 facing away from the side wall surface 508. The first guide surface 512 is connected between the first abutment surface 511 and the fifth surface 501. A distance between the first guide surface 512 and the side wall surface 508 gradually increases in a direction from the fifth surface 501 towards the sixth surface 502. Exemplarily, the first guide surface 512 is an inclined surface or a curved surface.

The convex point 52 is disposed on a wall surface of the second limiting hole 505 and protrudes from the wall surface of the second limiting hole 505 towards a central axis of the second limiting hole 505. The convex point 52 is implemented as multiple convex points 52. Every part of the convex points 52 is disposed on a wall surface of one second limiting hole 505, and the part of the convex points 52 are arranged at intervals within and around the second limiting hole 505, so as to ensure assembly stability of the limiting post 90 in the second limiting hole 505, and prevent inclination of the limiting post 90. Exemplarily, there are nine convex points 52, every three convex points 52 are disposed on the wall surface of one second limiting hole 505, and three convex points 52 are arranged at equal intervals around the central axis of the second limiting hole 505.

Each convex point 52 has a second abutment surface 521, a second guide surface 522, and a third guide surface 523. The second abutment surface 521 is a surface of the convex point 52 facing away from the wall surface of the second limiting hole 505. The second guide surface 522 is connected between the second abutment surface 521 and the bottom wall surface 507. In a direction from the bottom wall surface 507 to the sixth surface 502 (i.e., the negative Z-axis direction illustrated in the figure), a distance between the second guide surface 522 and the wall surface of the second limiting hole 505 gradually increases. For example, the second guide surface 522 is an inclined surface or a curved surface. The third guide surface 523 is connected between the second abutment surface 521 and the sixth surface 502. In a direction from the sixth surface 502 to the bottom wall surface 507 (i.e., a positive Z-axis direction illustrated in the figure), a distance between the third guide surface 523 and the wall surface of the second limiting hole gradually increases. Exemplarily, the third guide surface 523 is an inclined surface or a curved surface. In some other embodiments, each convex point 52 may have only the second guide surface 522 or only the third guide surface 523, which is not specifically limited in the present disclosure.

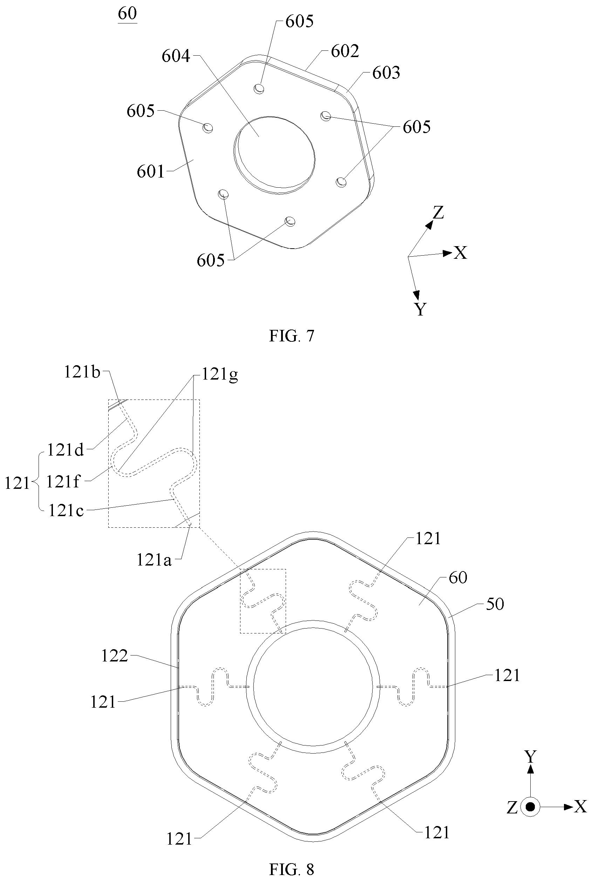

Reference is made to FIGS. 7 and 8 together, where FIG. 7 is a schematic structural view of the press ring 60 in the end cover assembly 120 illustrated in FIG. 4, viewed from another direction, and FIG. 8 is a schematic structural view of an assembly of the upper insulating member 50 and the press ring 60 in the end cover assembly 120 illustrated in FIG. 4.

Each press ring 60 is mounted in the first mounting recess 504 of one upper insulating member 50. Exemplarily, each press ring 60 is in a regular hexagon shape and matches the first mounting recess 504 of one upper insulating member 50. Each of the press rings 60 has a first surface 601, a second surface 602, and a peripheral side surface 603. The first surface 601 is a surface of the press ring 60 that faces towards the bottom wall surface 507. Specifically, the first surface 601 and the first exhaust groove 506 cooperatively define a first exhaust passage 121. Exemplarily, a cross section of the first exhaust passage 121 is rectangular, triangular, or trapezoidal. The first exhaust passage 121 is implemented as multiple first exhaust passages 121, and the multiple first exhaust passages 121 are arranged at intervals around the second mounting hole 503, so as to increase the exhaust rate of welding gas when the press ring 60 is welded to the terminal post 70, thereby improving welding efficiency of the press ring 60 and the terminal post 70. Exemplarily, the number of the first exhaust passages 121 is six, and the six first exhaust passages 121 are arranged at equal intervals around the second mounting hole 503.

It may be noted that, since the opening of the first exhaust groove 506 is defined in the bottom wall surface 507, the wall surface of the first exhaust groove 506 and the first surface 601 may cooperatively define the first exhaust passage 121. With the first exhaust groove 506, the cross-sectional area of the first exhaust passage 121 is increased, which helps to increase the exhaust rate of the welding gas when the press ring 60 is welded to the terminal post 70, and improve the welding rate of the press ring 60 to the terminal post 70.

The first exhaust passage 121 has a maximum width greater than or equal to 0.01 mm and less than 5 mm, and a depth greater than or equal to 0.01 mm and less than or equal to 0.5 mm. For example, the width of the first exhaust passage 121 may be 0.2 mm, and the depth of the first exhaust passage 121 may be 0.1 mm. With this design, not only can the first exhaust passage 121 have an effective exhaust function, but also it can be avoided that external moisture corrodes the sealing ring 80 due to the oversized first exhaust passage 121. In this way, it is possible to prevent liquid leakage of the end cover assembly 120 after the sealing ring 80 deteriorates and loses its function, ensure the sealing performance of the end cover assembly 120, and prolong the service life of the energy-storage apparatus.

Each first exhaust passage 121 has a first end 121a and a second end 121b. The first end 121a is one end of the first exhaust passage 121 close to the second mounting hole 503 and is in communication with the second mounting hole 503. The first air-inlet end 506a and the first surface 601 cooperatively form the first end 121a. The second end 121b is one end of the first exhaust passage 121 close to the side wall surface 508. The second end 121b is opposite to the first end 121a, and is spaced apart from the convex portion 51. The first air-outlet end 506b and the first surface 601 cooperatively form the second end 121b. A distance between the first end 121a and the second end 121b is less than the length of the first exhaust passage 121. In other words, the first exhaust passage 121 is non-linear. In other embodiments, the distance between the first end 121a and the second end 121b may be equal to the length of the first exhaust passage 121.

In this embodiment, the first exhaust passage 121 includes a first section 121c, a second section 121d, and a corner section 121 f. The first section 121c is a part of the first exhaust passage 121 close to the second mounting hole 503. The first section 121c includes the first end 121a, and is in communication with the second mounting hole 503. The first exhaust section 506c and the first surface 601 cooperatively form the first section 121c, and the first section 121c is linear. The second section 121d is a portion of the first exhaust passage 121 close to the side wall surface 508. The second section 121d is spaced from the first section 121c and includes the second end 121b. The second exhaust section 506d and the first surface 601 cooperatively form the second section 121d, and the second section 121d is linear. The corner section 21f is connected between the first section 121c and the second section 121d. The intermediate section 506f and the first surface 601 cooperatively form the corner section 21f, and the corner section 21f is non-linear. The corner section 121f may include multiple bent portions 121g, the multiple bent portions 121g are sequentially connected, and bending directions of at least two bent portions 121g are opposite. Exemplarily, the corner section 121f includes two bent portions 121g, each bent portion 121g is U-shaped, and the two bent portions 121g have opposite bending directions. Each bent portion 506g and the first surface 601 cooperatively form one bent portion 121g.

The second surface 602 is opposite to the first surface 601 in a thickness direction of the press ring 60 (i.e., the Z-axis direction illustrated in the figure). In other words, the second surface 602 is a surface of the press ring 60 facing away from the bottom wall surface 507. The peripheral side surface 603 is connected between the first surface 601 and the second surface 602 and is spaced from the side wall surface 508.

In the present embodiment, the convex portion 51 of the upper insulating member 50 abuts against the peripheral side surface 603 of the press ring 60 to define the second exhaust passage 122 between the side wall surface 508 and the peripheral side surface 603. The second exhaust passage 122 communicates the first exhaust passage 121 with the external environment. Specifically, the first abutment surface 511 of the convex portion 51 abuts against the peripheral side surface 603 of the press ring 60. The second exhaust passage 122 is in communication with the second end 121b and the second section 121d.

The convex portion 51 not only can realize the interference fit between the press ring 60 and the first mounting recess 504 of the upper insulating member 50, and ensure the assembly stability between the press ring 60 and the upper insulating member 50, but also can space the peripheral side surface 603 of the press ring 60 apart from the side wall surface 508 of the first mounting recess 504. In this way, the second exhaust passage 122 can be defined between the peripheral side surface 603 and the side wall surface 508. During the assembly process of the press ring 60 and the upper insulating member 50, the first guide surface 512 of the convex portion 51 can guide the press ring 60 to be mounted in the first mounting recess 504, which helps improve assembly efficiency and assembly reliability of the press ring 60 and the upper insulating member 50. In addition, during the assembly process of the end cover assembly 120, the upper insulating member 50 may be assembled with the press ring 60 first, and then be assembled in the second mounting recess 106 of the end cover 10, so as to save assembly time of the end cover assembly 120 and improve assembly efficiency of the end cover assembly 120.

In other embodiments, the upper insulating member 50 is not provided with the convex portion 51, but the press ring 60 is provided with a convex portion (not illustrated). The convex portion is disposed on the peripheral side surface 603 of the press ring 60 and abuts against the side wall surface 508 of the upper insulating member 50, so as to define the second exhaust passage 122 between the peripheral side surface 603 and the side wall surface 508. In this case, reference of the structure of the convex portion in the press ring 60 can be made to the above description relating to the convex portion 51 of the upper insulating member 50, which will not be described herein in detail again.

Each of the press rings 60 defines a third mounting hole 604 and a third limiting hole 605. The third mounting hole 604 is defined in the middle of the press ring 60 and extends through the press ring 60 in the thickness direction of the press ring 60. In other words, the third mounting hole 604 extends through the first surface 601 and the second surface 602 and is spaced apart from the peripheral side surface 603. Specifically, the third mounting hole 604 is in communication with the second mounting hole 503 and the first exhaust passage 121, and the third mounting hole 604 is in communication with the first end 121a and the first section 121c.

An opening of the third limiting hole 605 is defined in the first surface 601. The third limiting hole 605 is recessed from the first surface 601 towards the second surface 602 and spaced apart from the third mounting hole 604. The third limiting hole 605 is implemented as multiple third limiting holes 605, and the multiple third limiting holes 605 are arranged at intervals around the third mounting holes 604. The multiple third limiting holes 605 are in communication with the multiple second limiting holes 505 in one-to-one correspondence. Exemplarily, there are six third mounting holes 604, and the six third mounting holes 604 are arranged at equal intervals around the third mounting holes 604.

Each terminal post 70 passes through one fourth mounting hole 202 of the lower insulating member 20, one first mounting hole 105 of the end cover 10, one second mounting hole 503 of the upper insulating member 50, and one third mounting hole 604 of the press ring 60, and is fixedly connected to a wall surface of the third mounting hole 604 of the press ring 60. Each terminal post 70 is fixedly welded to the wall surface of the third mounting hole 604 of the press ring 60.

During the welding process of the press ring 60 and the terminal post 70, gas between the terminal post 70 and the press ring 60 expands under high temperature. The expanded gas may be exhausted to the external environment along the first exhaust passage 121 and the second exhaust passage 122. Since the gas will not be discharged from a molten weld bead, welding defects such as splatter spots or pinholes at the welding interface between the terminal post 70 and the press ring 60 can be avoided. Therefore, welding reliability between the terminal post 70 and the press ring 60 can be ensured, and assembly reliability of the end cover assembly 120 can be guaranteed. Furthermore, since the first exhaust passage 121 is non-linear, the path of the first exhaust passage 121 can be extended. The first exhaust passage 121 can not only allow welding gas to be discharged, but also ingress of external moisture to the location where the terminal post 70 is located. In this way, moisture can be prevented from corroding the sealing ring 80 and causing failure of the sealing ring 80, thus ensuring sealing reliability of the end cover assembly 120, and prolonging a service life of the energy-storage apparatus 100. Moreover, the bending directions of at least two bent portions 121g in the corner section 121f are opposite, which can increase the resistance against external moisture reaching the location where the terminal post 70 is located, avoid the failure of the sealing ring 80 caused by corrosion of the sealing ring 80 by the moisture, ensure sealing reliability of the end cover assembly 120, and prolong the service life of the energy-storage apparatus 100.

In addition, since the first exhaust passage 121 and the second exhaust passage 122 can allow gas to pass through, temporary sealing caused by tight contact between the press ring 60 and the upper insulating member 50, as well as between the upper insulating member 50 and the end cover 10 can be avoided. When the sealing ring 80 fails, the end cover assembly 120 can be promptly detected by helium detection, thereby ensuring sealing reliability of the end cover assembly 120, and preventing liquid leakage in the energy-storage apparatus 100.

Each sealing ring 80 is sleeved on one terminal post 70, and is disposed in one fourth mounting hole 202 of the lower insulating member 20 and one first mounting hole 105 of the end cover 10. The sealing ring 80 is clamped between a peripheral surface of the terminal post 70 and a wall surface of the first mounting hole 105 in a radial direction of the terminal post 70. This can not only avoid a short circuit caused by contact between the terminal post 70 and the end cover 10, but also seal the gap between the terminal post 70 and the end cover 10, thereby ensuring sealing reliability of the end cover assembly 120.

During assembly of the end cover assembly 120, the fourth mounting hole 202 of the lower plastic can be aligned with the first mounting hole 105 of the end cover 10 first. Then the upper insulating member 50 assembled with the press ring 60 is installed in the second mounting recess 106 of the end cover 10. The terminal post 70 sleeved with the sealing ring 80 passes through the fourth mounting hole 202 of the lower plastic, the first mounting hole 105 of the end cover 10, the second mounting hole 503 of the upper insulating member 50, and the third mounting hole 604 of the press ring 60 in sequence. A pressure is applied to the terminal post 70 to press the sealing ring 80, so that the sealing ring 80 is clamped between the terminal post 70 and a wall of the first mounting hole 105. Finally, the press ring 60 and the terminal post 70 are welded together.

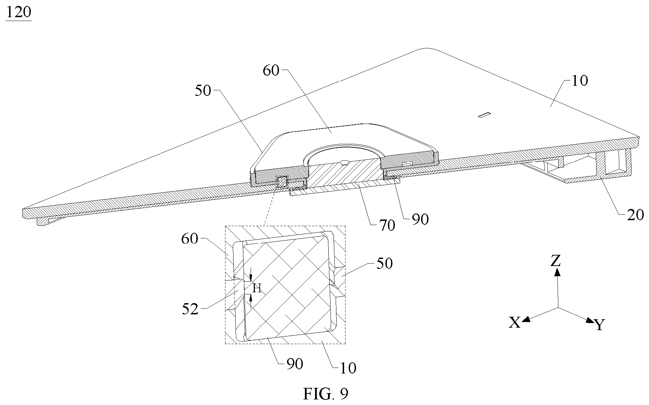

Refer is made to FIG. 9, where FIG. 9 is a schematic cross-sectional view of the end cover assembly 120 illustrated in FIG. 2, taken along line B-B.

The limiting posts 90 respectively pass through the second limiting holes 505 of the upper insulating member 50 in one-to-one correspondence. One end of the limiting post 90 is inserted into a corresponding first limiting hole 107, and the other end of the limiting post 90 is inserted into a corresponding third limiting hole 605. Exemplarily, the limiting post 90 may be a ceramic post. With the limiting post 90, it can not only increase assembling stability of the end cover assembly 120, but also improve the torsional strength of the terminal post 70, thereby improving usage reliability of the energy-storage apparatus 100. It may be understood that, the number of the limiting posts 90 is not limited to six as illustrated in FIG. 4, and the number of the limiting posts 90 may also be less than five or more than seven, which is not specifically limited in the present disclosure.

In this implementation, the convex point 52 of the upper insulating member 50 abuts against a peripheral surface of the limiting post 90, so as to achieve an interference fit between the limiting post 90 and the second limiting hole 505 of the upper insulating member 50, and ensure assembly stability between the limiting post 90 and the upper insulating member 50. An interference amount between the convex point 52 and the limiting post 90 is greater than or equal to 0.01 mm and less than or equal to 0.3 mm. Exemplarily, the interference amount between the convex point 52 and the limiting post 90 is 0.1 mm. It can be noted that, due to dimensional variations in component manufacturing, when the interference between the convex point 52 and the limit terminal post 90 is appropriate a proper range, it not only can ensure that the limiting post 90 will not fall out of the second limiting hole 505 due to an excessive small interference amount, but also prevent scraping between the limiting post 90 and the upper insulating member 50 due to an excessive large interference amount, thereby reducing the influence of plastic debris generated by scratching between the limiting post 90 and the upper insulating member 50 on the sealing performance of the end cover assembly 120.

Specifically, the second abutment surface 521 of the convex point 52 abuts against the peripheral surface of the limiting post 90. In the thickness direction of the upper insulating element 50, an abutment distance H between the second abutment surface 521 and the limiting post 90 is greater than or equal to 0.1 mm and less than or equal to 0.7 mm. The abutment distance H between the second abutment surface 521 and the limiting post 90 refers to a dimension of the abutment distance H in the thickness direction of the upper insulating member 50. Exemplarily, in the thickness direction of the upper insulating member 50, the abutment distance H between the second abutment surface 521 and the limiting post 90 is 0.3 mm. The abutment distance H between the second abutting surface 521 and the limiting post 90 is within an appropriate range, it can not only prevent the limiting post 90 from tilting or even falling off due to an excessively small abutment distance, but also avoid scratching between the limiting post 90 and the upper insulating member 50 caused by an excessively large abutment distance, thereby reducing the influence of plastic debris generated by scratching between the limiting post 90 and the upper insulating member 50 on the sealing performance of the end cover assembly 120. Furthermore, during the assembly process of the limiting post 90 and the upper insulating element 50, the second guide surface 522 and the third guide surface 523 of the convex point 52 can guide the limiting post 90 to pass through the second limiting hole 505, thereby improving the assembly efficiency and the assembly reliability of the limiting post 90 and the upper insulating element 50.

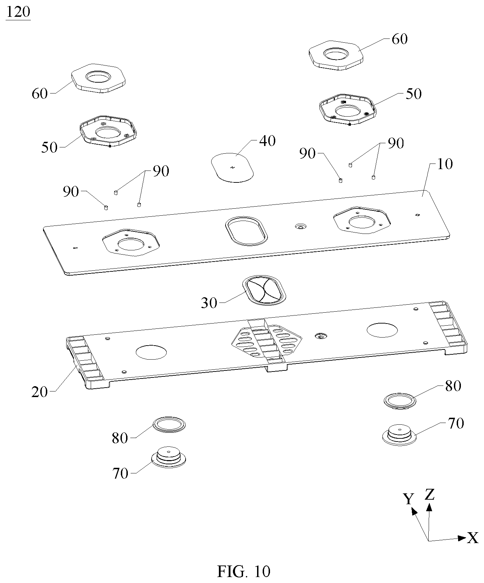

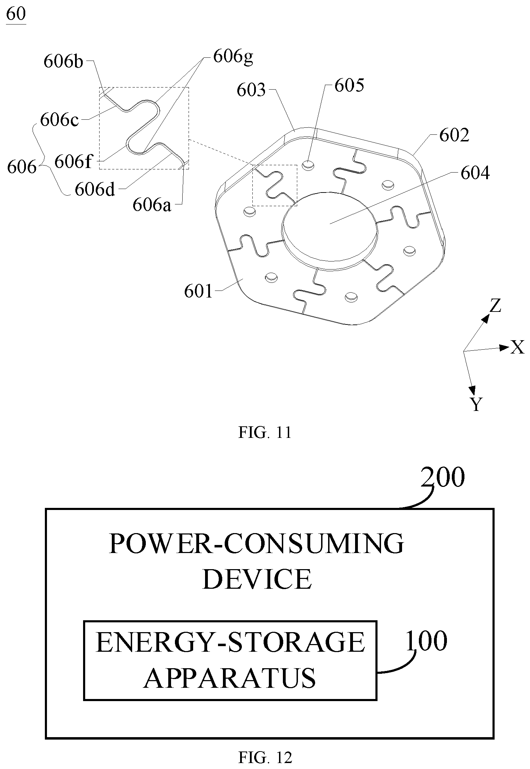

Reference is made to FIGS. 10 to 11, where FIG. 10 is an exploded schematic structural view of the end cover assembly 120 illustrated in FIG. 2 according to a second embodiment, and FIG. 11 is a structural schematic view of the press ring 60 in the end cover assembly 120 illustrated in FIG. 10, viewed from another direction.

The difference between the end cover assembly 120 illustrated in this embodiment and the end cover assembly 120 illustrated in the first embodiment lies in that the upper insulating member 50 does not define any first exhaust groove 506, and the press ring 60 defines a second exhaust groove 606. An opening of the second exhaust groove 606 is defined in the first surface 601. The second exhaust groove 606 is recessed from the first surface 601 towards the second surface 602. The second exhaust groove 606 is in communication with the third mounting hole 604 and is spaced apart from the third limiting hole 605. Exemplarily, a cross section of the second exhaust groove 606 is a rectangle, a triangle or a trapezoid. Specifically, the second exhaust groove 606 is implemented as multiple second exhaust grooves 606, and the multiple second exhaust grooves 606 are arranged at intervals around the third mounting hole 604. As an example, there may be six second exhaust grooves 606, and the six second exhaust grooves 606 are arranged at equal intervals around the third mounting hole 604. The second exhaust groove 606 has a width greater than or equal to 0.01 mm and less than 5 mm, and a depth greater than or equal to 0.01 mm and less than or equal to 0.5 mm. Exemplarily, the width of the second exhaust groove 606 is 0.2 mm, and the depth of the second exhaust groove 606 is 0.1 mm.

Each of the second exhaust grooves 606 has a second air-inlet end 606a and a second air-outlet end 606b. The second air-inlet end 606a is one end of the second exhaust groove 606 near the third mounting hole 604 and the second air-inlet end 606a is in communication with the third mounting hole 604. The second air-outlet end 606b is one end of the second exhaust groove 606 near the peripheral side surface 603 and the second air-outlet end 606b is opposite to the second air-inlet end 606a. A distance between the second air-inlet end 606a and the second air-outlet end 606b is less than the length of the second exhaust groove 606. In other words, the second exhaust groove 606 is non-linear.

The second exhaust groove 606 includes a third exhaust section 606c, a fourth exhaust section 606d, and a connecting section 606f. The third exhaust section 606c is a portion of the second exhaust groove 606 close to the third mounting hole 604. The third exhaust section 606c is in communication with the third mounting hole 604 and includes the second air-inlet end 606a. The third exhaust section 606cis linear. The fourth exhaust section 606d is a portion of the second exhaust groove 606 close to the peripheral side surface 603. The fourth exhaust section 606d is spaced apart from the third exhaust section 606c and includes the second air-outlet end 606b. The fourth exhaust passage 606d is linear. The connection section 606f is connected between the third exhaust passage 606c and the fourth exhaust passage 606d. The connecting section 606f is non-linear. For example, the connecting section 606f may include multiple folded portions 606g. The multiple folded portions 606g are connected sequentially, and bending directions of at least two folded portions 606g among multiple folded portions 606g are opposite. Exemplarily, the connecting section 606f includes two folded portions 606g, each of the two folded portions 606g is U-shaped, and the two folded portions 606g bend in opposite directions.

In this embodiment, the second exhaust groove 606 and the bottom wall surface 507 of the upper insulating member 50 cooperatively define the first exhaust passage 121. Specifically, the second air-inlet end 606a and the bottom wall surface 507 cooperatively form the first end 121a of the first exhaust passage 121. The second air-outlet end 606b and the bottom wall surface 507 cooperatively form the second end 121b. The third exhaust section 606c and the bottom wall surface 507 cooperatively form the first section 121c. The fourth exhaust section 606d and the bottom wall surface 507 cooperatively form the second section 121d. The connecting section 606f and the bottom wall surface 507 cooperatively form the corner section 121f. In some other embodiments, the upper insulating member 50 defines the first exhaust groove 506, the press ring 60 defines the second exhaust groove 606, and the first exhaust groove 506 and the second exhaust groove 606 cooperatively define the first exhaust passage 121, which is not specifically limited in the present disclosure.

During the welding process of the press ring 60 and the terminal post 70, gas between the terminal post 70 and the press ring 60 expands under high temperature. The expanded gas can be exhausted to the external environment along the first exhaust passage 121 and the second exhaust passage 122. Since the gas will not be discharged from a molten weld bead, welding defects such as splatter spots or pinholes at the welding interface between the terminal post 70 and the press ring 60. Therefore, welding reliability between the terminal post 70 and the press ring is ensured, and assembly reliability of the end cover assembly 120 is further guaranteed. Furthermore, since the first exhaust passage 121 is non-linear, the path of the first exhaust passage 121 is extended. The first exhaust passage 121 can not only allow welding gas to be discharged, but also reduce ingress of external moisture to the location where the terminal post 0 is located. In this way, moisture can be prevented from corroding the sealing ring 80 and causing failure of the sealing ring 80, thus ensuring sealing reliability of the end cover assembly 120, and prolonging a service life of the energy-storage apparatus 100.

In addition, since the first exhaust passage 121 and the second exhaust passage 122 can allow the gas to pass through, temporary sealing caused by tight contact between the press ring 60 and the upper insulating member 50, as well as between the upper insulating member 50 and the end cover 10 can be avoided. When the sealing ring 80 fails, the end cover assembly 120 can be promptly detected by helium detection, thereby ensuring sealing reliability of the end cover assembly 120, and preventing liquid leakage in the energy-storage apparatus 100.

The present disclosure further provides a power-consuming device 200. As illustrated in FIG. 12, the power-consuming device 200 includes the energy-storage apparatus 100. The energy-storage apparatus 100 is configured to supply power to the power-consuming device 200. The power-consuming device 200 may be a new energy vehicle, an electricity storage station, a server, and other devices requiring electricity.

The above descriptions are merely specific embodiments of the present disclosure, but are not intended to limit the scope of protection of the present disclosure. Any variation or replacement readily figured out by a person skilled in the art within the technical scope disclosed in the present disclosure shall fall within the scope of protection of the present disclosure; Without conflict, embodiments of the present disclosure and features in the embodiments can be combined with each other. Therefore, the scope of protection of the present disclosure shall be subject to the scope of protection of the claims.

## Claims

1. An end cover assembly (120) for an energy-storage apparatus (100), comprising an end cover (10), an upper insulating member (50), a press ring (60), and a terminal post (70);
wherein the end cover (10) defines a first mounting hole (105), and the first mounting hole (105) extends through the end cover (10) in a thickness direction of the end cover (10);
wherein in the thickness direction of the end cover (10), the upper insulating member (50) is mounted at one side of the end cover (10), the upper insulating member (50) defines a second mounting hole (503) and a first mounting recess (504), the second mounting hole (503) extends through the upper insulating member (50) in a thickness direction of the upper insulating member (50) and is in communication with the first mounting hole (105), an opening of the first mounting recess (504) is defined in a surface of the upper insulating member (50) facing away from the end cover (10), the first mounting recess (504) surrounds the second mounting hole (503) and is in communication with the second mounting hole (503), the first mounting recess (504) has a bottom wall surface (507) and a side wall surface (508), the bottom wall surface (507) is opposite to the opening of the first mounting recess (504), and the side wall surface (508) is connected to the bottom wall surface (507) and surrounds the bottom wall surface (507);
wherein the press ring (60) is mounted in the first mounting recess (504), the press ring (60) has a first surface (601), a second surface (602), and a peripheral side surface (603), the first surface (601) faces towards the bottom wall surface (507), the second surface (602) is opposite to the first surface (601), and the peripheral side surface (603) is connected between the first surface (601) and the second surface (602);
wherein the press ring (60) defines a third mounting hole (604), the third mounting hole (604) extends through the first surface (601) and the second surface (602), and the third mounting hole (604) is in communication with the second mounting hole (503);
wherein the upper insulating member (50) and the press ring (60) cooperatively define a first exhaust passage (121) in one of following three cases: in a first case, the upper insulating member (50) further defines a first exhaust groove (506), an opening of the first exhaust groove (506) is defined in the bottom wall surface (507), the first exhaust groove (506) is in communication with the second mounting hole (503), and the first exhaust groove (506) and the first surface (601) cooperatively define the first exhaust passage (121); in a second case, the press ring (60) defines a second exhaust groove (606), an opening of the second exhaust groove (606) is defined in the first surface (601), the second exhaust groove (606) is in communication with the third mounting hole (604), and the second exhaust groove (606) and the bottom wall surface (507) cooperatively define the first exhaust passage (121); and in a third case, the upper insulating member (50) further defines the first exhaust groove (506), the opening of the first exhaust groove (506) is defined in the bottom wall surface (507), the first exhaust groove (506) is in communication with the second mounting hole (503), the press ring (60) defines the second exhaust groove (606), the opening of the second exhaust groove (606) is defined in the first surface (601), the second exhaust groove (606) is in communication with the third mounting hole (604), and the second exhaust groove (606) and the first exhaust groove (506) cooperatively define the first exhaust passage (121);
wherein the first exhaust passage (121) has a first end (121a) and a second end (121b), the first end (121a) is in communication with both the second mounting hole (503) and the third mounting hole (604), the second end (121b) is opposite to the first end (121a), and a distance between the second end (121b) and the first end (121a) is less than or equal to a length of the first exhaust passage (121);
wherein the upper insulating member (50) and the press ring (60) cooperatively define a second exhaust passage (122) in one of following two cases: in a first case, the upper insulating member (50) is provided with a convex portion (51), and the convex portion (51) is disposed on the side wall surface (508) and abuts against the peripheral side surface (603) to define the second exhaust passage (122) between the side wall surface (508) and the peripheral side surface (603); and in a second case, the press ring (60) is provided with a convex portion (51), and the convex portion (51) is disposed on the peripheral side surface (603) and abuts against the side wall surface (508) to define the second exhaust passage (122) between the peripheral side surface (603) and the side wall surface (508);
wherein the second exhaust passage (122) communicates the second end (121b) with an external environment; and
wherein the terminal post (70) passes through the first mounting hole (105), the second mounting hole (503), and the third mounting hole (604), and is fixedly welded to a wall surface of the third mounting hole (604).

2. The end cover assembly (120) according to claim 1, wherein the first exhaust passage (121) is implemented as a plurality of first exhaust passages (121), and the plurality of first exhaust passages (121) are arranged at intervals around the third mounting hole (604).

3. The end cover assembly (120) of claim 1 or 2, wherein the first exhaust passage (121) comprises a first section (121c), a corner section (121f), and a second section (121d), the first section (121c) is in communication with both the second mounting hole (503) and the third mounting hole (604), and the first section (121c) comprises the first end (121a); and the second section (121d) is in communication with the second exhaust passage (122) and comprises the second end (121b), the second section (121d) is spaced apart from the first section (121c), and the corner section (121f) is connected between the first section (121c) and the second section (121d).

4. The end cover assembly (120) according to claim 3, wherein the corner section (121f) comprises a plurality of bent portions (121g), the plurality of bent portions (121g) are sequentially connected, and at least two bent portions (121g) among the plurality of bent portions (121g) have opposite bending directions.

5. The end cover assembly (120) according to claim 1, wherein a maximum width of the first exhaust passage (121) is greater than or equal to 0.01 mm and less than or equal to 5 mm; and/or a depth of the first exhaust passage (121) is greater than or equal to 0.01 mm and less than or equal to 0.5 mm.

6. The end cover assembly (120) according to claim 1, further comprising a sealing ring (80), wherein the sealing ring (80) is sleeved on the terminal post (70) and is disposed in the first mounting hole (105), and the sealing ring (80) is clamped between the terminal post (70) and a wall surface of the first mounting hole (105) in a radial direction of the terminal post (70).

7. The end cover assembly (120) according to claim 1, wherein the end cover (10) further defines a plurality of first limiting holes (107), openings of the plurality of first limiting holes (107) face towards the upper insulating member (50), and the plurality of first limiting holes (107) are defined around the first mounting hole (105) and spaced apart from the first mounting hole (105);
wherein the upper insulating member (50) further defines a plurality of second limiting holes (505), the plurality of second limiting holes (505) extend through the bottom wall surface (507) and a surface of the upper insulating member (50) facing towards the end cover (10), the plurality of second limiting holes (505) are defined around the second mounting hole (503) and are spaced apart from the second mounting hole (503), and the plurality of second limiting holes (505) are in communication with the plurality of first limiting holes (107) in one-to-one correspondence;
wherein the press ring (60) defines a plurality of third limiting holes (605), openings of the plurality of third limiting holes (605) are defined in the first surface (601), the plurality of third limiting holes (605) are defined around the third mounting hole (604) and are spaced apart from the third mounting hole (604), and the third limiting holes (605) are in in communication with the plurality of second limiting holes (505) in one-to-one correspondence; and
wherein the end cover assembly (120) further comprises a plurality of limiting posts (90), the plurality of limiting posts (90) respectively pass through the plurality of second limiting holes (505) in one-to-one correspondence, one end of each of the plurality of limiting posts (90) is inserted into a corresponding first limiting hole (107) among the plurality of first limiting holes (107), and the other end of each of the plurality of limiting posts (90) is inserted into a corresponding third limiting hole (605) among the plurality of third limiting holes (605).

8. The end cover assembly (120) according to claim 7, wherein the upper insulating member (50) defines a convex point (52), and the convex point (52) is disposed on a wall surface of each of the plurality of second limiting holes (505) and abuts against a limiting post (90).

9. The end cover assembly (120) according to claim 8, wherein the convex point (52) is implemented as a plurality of convex points (52), and the plurality of convex points (52) are arranged at intervals within and around the second limiting hole (505).

10. The end cover assembly (120) according to claim 8 or 9, wherein in a thickness direction of the end cover assembly (120), an abutment distance between the convex point (52) and the limiting post (90) is greater than or equal to 0.1 mm and less than or equal to 0.7 mm.

11. The end cover assembly (120) according to claim 8 or 9, wherein an interference amount between the convex point (52) and the limiting post (90) is greater than or equal to 0.01 mm and less than or equal to 0.3 mm.

12. An energy-storage apparatus (100), comprising a housing (110), a cell assembly (130), and the end cover assembly (120) according to any one of claims 1 to 11, wherein the housing (110) defines an accommodating cavity (110a) and an opening (110b), the accommodating cavity (110a) is defined inside the housing (110), the opening is defined on a top side of the accommodating cavity (110a) and is in communication with the accommodating cavity (110a), the cell assembly (130) is accommodated in the accommodating cavity (110a), and the end cover assembly (120) is mounted on the housing (110) and seals the opening (110b).

13. A power-consuming device (200), comprising the energy-storage apparatus (100) according to claim 12, wherein the energy-storage apparatus (100) is configured to supply power to the power-consuming device (200).
